# EUROPEAN PATENT APPLICATION

(11) **EP 4 202 447 A1**
(43) Date of publication of application: **28.06.2023**
(21) Application number: 21217592.1
(22) Date of filing: 23.12.2021
(51) Int. Cl.: G01P 13/00, G01F 1/68, G03F 7/20, H05G 2/00

(54) **LIQUID METAL SUPPLY ASSEMBLY**

(71) Applicant: ASML Netherlands B.V., 5500 AH Veldhoven (NL)
(72) Inventor: DERKS, Sander, Catharina, Reinier, 5500 AH Veldhoven (NL); RIJPMA, Albert, Pieter, 5500 AH Veldhoven (NL); BESSEMS, David, 5500 AH Veldhoven (NL); KERSSEMAKERS, Sander, 5500 AH Veldhoven (NL)
(74) Representative: ASML Netherlands B.V.

(57) **Abstract**

There is described a liquid metal supply assembly for use in an EUV light source, the assembly comprising: a) a first reservoir configured to hold liquid metal at a first temperature; b) a liquid metal transportation conduit in fluid communication with the first reservoir wherein the liquid metal transportation conduit is configured to be at a second temperature different to the first temperature; c) a temperature sensor configured to measure the temperature of the liquid metal transportation conduit to detect a flow of liquid from the first reservoir through the liquid metal transportation conduit via a change in temperature of the liquid metal transportation conduit. Also described is an EUV light source, a method of detecting flow of a liquid metal, as well as the use thereof.

## Description

### FIELD

The present invention relates to a liquid metal supply assembly for use in an EUV light source, an EUV light source, a method of detecting flow of liquid metal, as well as a lithographic apparatus, and the use of a liquid metal supply apparatus.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern at a patterning device (e.g., a mask) onto a layer of radiation-sensitive material (resist) provided on a substrate.

To project a pattern on a substrate a lithographic apparatus may use electromagnetic radiation. The wavelength of this radiation determines the minimum size of features which can be formed on the substrate. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

The substrate, which may also be referred to as a wafer, is supported within the lithographic apparatus by a wafer table.

Certain lithographic apparatuses which use EUV radiation create the radiation beam by illuminating droplets of a target material with a laser. The EUV Source creating such radiation is sometimes referred to as Laser Produced Plasma source. The laser converts the target material into a plasma, which subsequently releases EUV radiation, which can be collected and formed into a radiation beam. The droplets of target material are generated by a droplet generator assembly, which is supplied with the target material from a target material storage assembly. Due to the relatively high pressures of target material and the nature of the liquid target material itself, there is a risk of leakage of the liquid target material. In addition, lines used to transport the target material may become blocked thereby preventing the flow of target material.

The present invention has been provided with a view to addressing at least some of the drawbacks of existing systems.

### SUMMARY

According to a first aspect of the present disclosure, there is provided a liquid metal supply assembly for use in an EUV light source, the assembly comprising: a) a first reservoir configured to hold liquid metal at a first temperature; b) a liquid metal transportation conduit in fluid communication with the first reservoir wherein the liquid metal transportation conduit is configured to be at a second temperature different to the first temperature; c) a temperature sensor configured to measure the temperature of the liquid metal transportation conduit to detect a flow of liquid from the first reservoir through the liquid metal transportation conduit via a change in temperature of the liquid metal transportation conduit.

The liquid metal transportation conduit may become blocked by the presence of particles or bubbles therein. This can prevent the flow of the liquid metal out of the first reservoir and thereby interrupt operation of an EUV light source to which the liquid metal supply assembly is connected. Currently, there is no way of determining whether the liquid metal is able to flow through the conduits and this can only become apparent when it is already an issue. In the present disclosure, by providing the first reservoir and the liquid metal transportation conduit at different temperatures, it is possible to determine whether there is flow of the liquid metal by sensing the change in temperature of the liquid metal transportation conduit. In the case where the nominal temperature of the liquid metal supply conduit is higher than the temperature within the first reservoir, when the liquid metal is flowing through the conduit, this will have the effect of reducing the nominal temperature of the conduit and a higher thermal input will be required to maintain the desired set temperature. In the case where the nominal temperature of the liquid metal supply conduit is lower than the temperature within the first reservoir, when the liquid metal is flowing through the conduit, this will have the effect of increasing the temperature of the liquid metal supply conduit. As such, the thermal input required to maintain the desired set temperature will be reduced. It will be appreciated that the temperature of the liquid metal supply conduit is higher than the ambient temperature, so it will need to be provided with thermal energy to maintain it at the desired set temperature. Any adjustment to the amount of thermal energy needed to be provided to maintain the desired set temperature may be used to determine whether liquid metal is indeed flowing within the conduit. If the amount of thermal energy required to maintain the desired set temperature is unchanged, this will indicate that there is no flow of liquid metal. Whilst this may not solve the issue of a blocked conduit, it does provide some warning that flow is not taking place and so action can be taken before any damage is caused and to prevent an unexpected shutdown. If there is an expected change in temperature of the conduit, or at least a change in the thermal energy required to maintain the nominal temperature, it can be inferred that liquid metal is indeed flowing through the conduit.

The assembly may further include a heater in thermal communication with the liquid metal transportation conduit.

The assembly may include a controller configured to receive a signal from the temperature sensor to the heater to control the heater. The controller may activate or deactivate the heater depending on the temperature of the liquid metal transportation conduit. This may be done in order to maintain the temperature of the conduit at substantially the desired nominal temperature. The thermal requirement of the heater can be used to infer the flow, or lack thereof, of the liquid metal in the conduit, with the temperature or thermal requirements being unchanged in respect of the intended set-point if there is no flow.

The assembly may include a data recordal module configured to record the temperature of the heated liquid metal transportation conduit and/or the operational parameters of the heater. This provides two ways in which the flow of liquid metal can be inferred. By recording the data regarding the temperature and/or the operational parameters of the heater, it is possible to provide a record which demonstrates whether or not liquid metal has flowed through the conduit. It is possible to estimate based on the observed temperature changes or operational parameters, the amount of liquid tin which has flowed. This may be useful to determine whether the liquid metal transfer has been successful.

The second temperature may be higher than the first temperature, optionally wherein the second temperature is around 10°C to around 60°C higher than the first temperature, optionally around 20°C, around 30°C, around 40°C, or around 50° higher than the first temperature. The liquid metal may be liquid tin, which has a melting point of 231.9°C. In order to avoid solidification, the minimum temperature may be around 240°C. As such, the maximum temperature may be around 300°C. Although higher temperatures are possible, the liquid tin can attack the materials of the reservoir and the conduit at such temperatures, so they are preferably avoided.

The liquid metal transportation conduit may be in the form of a pipe or a channel provided in a block.

The assembly may include a second reservoir configured to hold liquid metal. The first reservoir may be in fluid communication with the second reservoir at least partially via the liquid metal transportation conduit. A refill assembly for an EUV light source includes a first reservoir, and a second reservoir. The first reservoir receives liquid tin and stores the liquid tin. When the second reservoir requires refilling, liquid tin from the first reservoir is transferred via a liquid metal transportation conduit to the second reservoir. It is important to know that the liquid tin has been successfully transported to the second reservoir, and the present disclosure provides one way by which it can be inferred that the transfer has been successful. The reservoirs may be configured to be pressurised by a gas, such as forming gas comprising argon and hydrogen. The reservoirs may be pressurised such that the liquid metal contained therein is discharged through the connection assembly to provide liquid metal to a droplet generator assembly.

The second reservoir may be in fluid communication with a droplet generator assembly configured to generate droplets of the liquid metal. In brief, the droplets are illuminated by a laser which turns them into a plasma. The plasma releases energy in the form of electromagnetic radiation, including EUV radiation, which can then be used in a lithographic process. As such, the first reservoir and the second reservoir can be in fluid communication with the droplet generator assembly and a priming system, for example as described in WO2020/187617, the contents on which are incorporated herein by reference in its entirety.

The first reservoir may be in fluid communication with a liquid metal refill assembly. The liquid metal refill assembly is configured to receive an ingot of metal, such as tin, which is to be used as the fuel in an EUV light source. The liquid metal is transferred to the first reservoir for storage. The present disclosure provides an assembly and method by which it is possible to determine whether the transfer has been successful.

The assembly may include one or more freeze valves operable to control flow of liquid metal through the assembly. Freeze valves are able to prevent the flow of liquid metal by allowing the liquid metal to solidify therein, thereby blocking flow. The freeze valves can be opened by heating the freeze valves to above the melting point of the metal.

The assembly is configured to operate at pressure of up to 30 kpsi, up to 25 kpsi, up to 20 kpsi, up to 15 kpsi, up to 10 kpsi, up to 5 kpsi, optionally at pressures of 2 kpsi or higher, 3 kpsi or higher, or 4 kpsi or higher. A liquid tin supply system typically is operated under high pressure as this is required to provide the tin droplets which are illuminated by a laser beam to generate EUV radiation with sufficient speed.

The liquid metal may be liquid tin. Liquid tin is used to create the droplets of fuel for generating EUV radiation in an EUV light source.

According to a second aspect of the present disclosure, there is provided an EUV light source including the liquid metal supply assembly according to the first aspect of the present disclosure.

According to a third aspect of the present disclosure, there is provided a method of detecting flow of liquid metal, a) providing a liquid metal transportation conduit at an intended pre-set temperature different to the temperature of liquid metal held in a liquid metal reservoir in fluid communication with the liquid metal transportation conduit; b) measuring a temperature change of the liquid metal transportation conduit to determine whether liquid metal is flowing through the liquid metal transportation conduit.

As described in respect of the first aspect, it is possible to infer the flow of liquid metal by monitoring the change in temperature of the liquid metal transportation conduit. If the temperature or the thermal requirement to maintain the intended pre-set temperature do not change when the liquid metal is intended to be flowing compared to when it is not intended to be flowing, this indicates that there is some blockage preventing the liquid metal from flowing.

The method may include holding a liquid metal transportation conduit at a temperature higher than the temperature of liquid metal held in a liquid metal reservoir in fluid communication with the liquid metal transportation conduit. Alternatively, the reverse configuration could be adopted.

The method may include operating a heater in thermal communication to maintain the intended pre-set temperature of the liquid metal transportation conduit. It will be appreciated that the heater may need to constantly supply thermal energy in order to account for natural losses to the environment. However, any changes to this background required level of heating can be used to infer flow of liquid metal.

The method may include calculating the flow rate of the liquid metal through the liquid metal transportation conduit based on the magnitude of the additional thermal energy required to maintain the temperature of the liquid metal transportation conduit at the pre-set temperature. This information may then be used to determine whether transfer of the liquid metal has been successful. If it has, no further action may be required. If it has not been successful, remedial action may be required.

According to a fourth aspect of the present disclosure, there is provided a lithographic apparatus including the liquid metal supply assembly or EUV light source according to the first or second aspects of the present disclosure.

According to a fifth aspect of the present disclosure, there is provided the use of the liquid metal supply assembly, EUV light source, or method of any aspect of the present disclosure in a lithographic apparatus or method.

The features of any aspect of the present invention may be combined except where the features are mutually incompatible and all such combinations are explicitly considered and disclosed.

### BRIEF DESCRIPTION OF THE DRAWINGS

Embodiments of the invention will now be described, by way of example only, with reference to the accompanying schematic drawings, in which:
- Figure 1 depicts a lithographic system comprising a lithographic apparatus and a radiation source;
- Figure 2 is a schematic depiction of an assembly according to the present disclosure;
- Figure 3 is a schematic depiction of an assembly comprising separately formed freeze valves and transfer pipes; and
- Figure 4 is a schematic depiction of an assembly according to the present disclosure.

### DETAILED DESCRIPTION

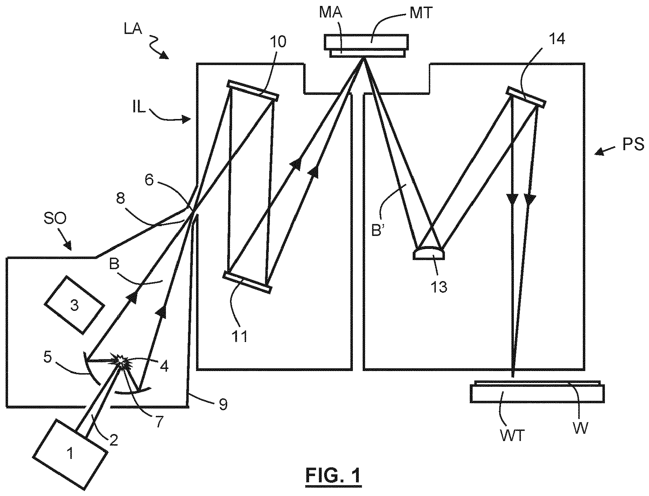

Figure 1 shows a lithographic system comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The faceted field mirror device 10 and faceted pupil mirror device 11 together provide the EUV radiation beam B with a desired cross-sectional shape and a desired intensity distribution. The illumination system IL may include other mirrors or devices in addition to, or instead of, the faceted field mirror device 10 and faceted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13,14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13,14 in Figure 1, the projection system PS may include a different number of mirrors (e.g., six or eight mirrors).

The substrate W may include previously formed patterns. Where this is the case, the lithographic apparatus LA aligns the image, formed by the patterned EUV radiation beam B', with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO shown in Figure 1 is, for example, of a type which may be referred to as a laser produced plasma (LPP) source. A laser system 1, which may, for example, include a CO₂ laser, is arranged to deposit energy via a laser beam 2 into a fuel, such as tin (Sn) which is provided from, e.g., a fuel emitter 3. Although tin is referred to in the following description, any suitable fuel may be used. The fuel may, for example, be in liquid form, and may, for example, be a metal or alloy. The fuel emitter 3 may comprise a nozzle configured to direct tin, e.g. in the form of droplets, along a trajectory towards a plasma formation region 4. The laser beam 2 is incident upon the tin at the plasma formation region 4. The deposition of laser energy into the tin creates a tin plasma 7 at the plasma formation region 4. Radiation, including EUV radiation, is emitted from the plasma 7 during deexcitation and recombination of electrons with ions of the plasma. The fuel emitter 3 may be part of a droplet generator assembly (not shown). The droplet generator assembly may be supplied with liquid tin via the connection assembly according to the present invention.

The EUV radiation from the plasma is collected and focused by a collector 5. Collector 5 comprises, for example, a near-normal incidence radiation collector 5 (sometimes referred to more generally as a normal-incidence radiation collector). The collector 5 may have a multilayer mirror structure which is arranged to reflect EUV radiation (e.g., EUV radiation having a desired wavelength such as 13.5 nm). The collector 5 may have an ellipsoidal configuration, having two focal points. A first one of the focal points may be at the plasma formation region 4, and a second one of the focal points may be at an intermediate focus 6, as discussed below.

The laser system 1 may be spatially separated from the radiation source SO. Where this is the case, the laser beam 2 may be passed from the laser system 1 to the radiation source SO with the aid of a beam delivery system (not shown) comprising, for example, suitable directing mirrors and/or a beam expander, and/or other optics. The laser system 1, the radiation source SO and the beam delivery system may together be considered to be a radiation system.

Radiation that is reflected by the collector 5 forms the EUV radiation beam B. The EUV radiation beam B is focused at intermediate focus 6 to form an image at the intermediate focus 6 of the plasma present at the plasma formation region 4. The image at the intermediate focus 6 acts as a virtual radiation source for the illumination system IL. The radiation source SO is arranged such that the intermediate focus 6 is located at or near to an opening 8 in an enclosing structure 9 of the radiation source SO.

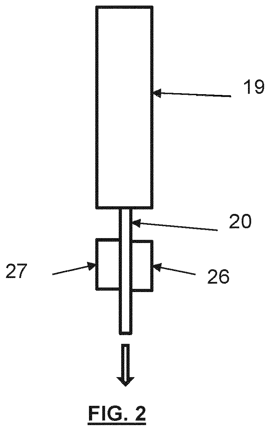

Figure 2 is a schematic depiction of an assembly according to the present disclosure. There is provided a first reservoir 19 which is configured to hold liquid metal, such as liquid tin, at a first temperature. The assembly further includes a liquid metal transportation conduit 20 in fluid communication with the first reservoir 19. A temperature sensor 26 is provided to measure the temperature of the liquid metal transportation conduit 20. An optional heater 27 may be provided to control the temperature of the liquid metal transportation conduit 20.

In operation, liquid metal, such as liquid tin, is held within the reservoir 19. When it is necessary to discharge the liquid metal, a freeze valve (not shown) is opened and pressure within the reservoir 19 forces the liquid metal out of the reservoir 19 through the conduit 20. Since there is a temperature difference between the set temperature of the reservoir 19 and the set temperature of the conduit 20, the temperature sensor 26 is able to detect a change in the temperature to indicate that the liquid metal is flowing. In the case where there is some kind of blockage, the liquid metal will not flow and so the temperature of the conduit 20 will remain static. It will be appreciated that a heater may be required to provide thermal energy to the conduit in order to account for natural losses to the environment and to keep the conduit at the intended set temperature. The temperature sensor 26 can be connected to a heater 27, possibly via a controller (not shown), to control the heater to provide additional or less thermal energy, as required to maintain the set point. It will be appreciated that the figure is schematic and the location of the temperature sensor and/or heater is not limited to that shown in the figure.

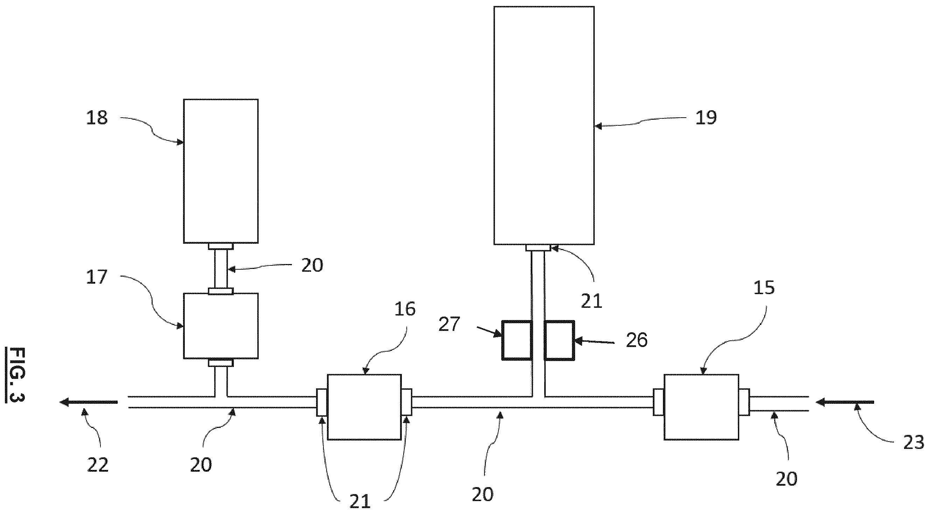

Figure 3 is a schematic depiction of an assembly for a liquid metal supply system used in an EUV light source. The assembly include a first freeze valve 15, a second freeze valve 16, and a third freeze valve 17. The assembly also includes a primary reservoir 18, which may also be referred to as a second reservoir, and a refill reservoir 19, which may also be referred to as a first reservoir, which are configured to receive a liquid metal. Connecting the freeze valves 15, 16, 17, the primary reservoir 18, and the refill reservoir 19 are separately formed liquid metal transportation conduits in the form of transfer pipes 20. At the junction of the transfer pipes 20 and freeze valves 15, 16, 17, the primary reservoir 18, and the refill reservoir 19 are connections 21. The assembly includes an output 22 to a nozzle supply system (not shown), which ultimately forms droplets of liquid metal for the generation of radiation of a desired wavelength. The assembly also includes an input 23 from a priming system, which is configured to produce a liquid target material from solid matter. The temperature sensor 26 and the heater 27 may be located at any point in the system where it is desirable to determine whether liquid metal is actually flowing. Indeed, there may be more than one temperature sensor 26 and/or heater 27 in the apparatus positioned at various points within the apparatus.

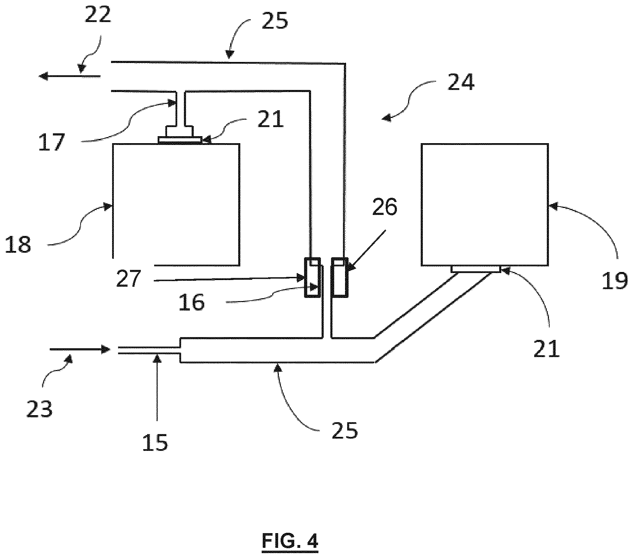

Figure 4 is a schematic depiction of a connection assembly 24 according to an embodiment of the present disclosure, which is similar to that depicted in Figure 3 and in which the same reference numerals refer to the same components. The geometry of the schematic depiction is not intended to indicate a specific geometry and other geometries are possible. The connection assembly 24 comprises a first freeze valve 15, a second freeze valve 16 and an optional third freeze valve 17. It will be appreciated that in some embodiments, there is no third freeze valve 17. As depicted, the first, second, and third freeze valves 15, 16, 17 are connected by interior passages 25, which may also be referred to as liquid metal transportation conduits. The freeze valves 15, 16, 17 are formed integrally with the interior passages 25. With the depicted embodiment, there are four connections, namely between the liquid metal input from a priming assembly to the first freeze valve 15, between the refill reservoir and the interior passage 25 connecting to the first freeze valve 15 and the second freeze valve 16, between the primary reservoir 18 and the optional third freeze valve 17, and between the interior passage 25 and the liquid metal output to the nozzle supply system 22.

The connection assembly 24 may be manufactured using additive manufacturing, also referred to as 3D printing. This allows for the manufacture of a unitary body with the desired internal features, such as the freeze valves and interior passages. The connection assembly 24 may be manufactured from a billet. The interior passages and freeze valves may be manufactured via drilling. Whilst drilling may require the presence of additional holes in the billet to create the required interior features, such additional holes can be plugged and sealed. There may be a plug or a cap provided which is configured to seal any holes within the exterior of the monolithic block. The plug or cap can comprise any suitable material, although it is preferred that the material is the same as that of the monolithic block.

The areas adjacent to the freeze valves 15, 16, 17 have a lower cross-sectional area than other areas of the monolithic block. The purpose of this is to control the transfer of thermal energy through the monolithic block from one freeze valve to another. In this way, the freeze valves can effectively be isolated from one another to allow more convenient control of the opening and closing of the freeze valves. Additionally or alternatively, there can be a reduction of the diameter of the interior passages.

The connection assembly 24 may include conditioning elements or units (not shown) in thermal communication with one or more freeze valves. One or more controllers (not shown) may also be provided to control the operation of the conditioning elements or units.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquidcrystal displays (LCDs), thin-film magnetic heads, etc.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A liquid metal supply assembly for use in an EUV light source, the assembly comprising:
a) a first reservoir configured to hold liquid metal at a first temperature;
b) a liquid metal transportation conduit in fluid communication with the first reservoir wherein the liquid metal transportation conduit is configured to be at a second temperature different to the first temperature;
c) a temperature sensor configured to measure the temperature of the liquid metal transportation conduit to detect a flow of liquid from the first reservoir through the liquid metal transportation conduit via a change in temperature of the liquid metal transportation conduit.

2. The liquid metal supply assembly according to claim 1, wherein the assembly further included a heater in thermal communication with the liquid metal transportation conduit.

3. The liquid metal supply assembly according to claim 2, wherein the assembly includes a controller configured to receive a signal from the temperature sensor to the heater to control the heater.

4. The liquid metal supply assembly according to claim 2 or claim 3, wherein the assembly further includes a data recordal module configured to record the temperature of the heated liquid metal transportation conduit and/or operational parameters of the heater.

5. The liquid metal supply assembly according to any preceding claim wherein the second temperature is higher than the first temperature, optionally wherein the second temperature is around 10°C to around 60°C higher than the first temperature, optionally around 20°C, around 30°C, around 40°C, or around 50° higher than the first temperature.

6. The liquid metal supply assembly according to any preceding claim, wherein the liquid metal transportation conduit is in the form of a pipe or a channel provided in a block.

7. The liquid metal supply assembly according to any preceding claim, the assembly further including a second reservoir configured to hold liquid metal, wherein the first reservoir is in fluid communication with the second reservoir at least partially via the liquid metal transportation conduit.

8. The liquid metal supply assembly of claim 7, wherein the second reservoir is in fluid communication with a droplet generator assembly configured to generate droplets of the liquid metal.

9. The liquid metal supply assembly according to any preceding claim, wherein the first reservoir is in fluid communication with a liquid metal refill assembly.

10. The liquid metal supply assembly according to any preceding claim, wherein the assembly includes one or more freeze valves operable to control flow of liquid metal through the assembly.

11. The liquid metal supply assembly according to any preceding claim, wherein the assembly is configured to operate at pressure of up to 30 kpsi, up to 25 kpsi, up to 20 kpsi, up to 15 kpsi, up to 10 kpsi, up to 5 kpsi, optionally at pressures of 2 kpsi or higher, 3 kpsi or higher, or 4 kpsi or higher.

12. The liquid metal supply assembly according to any preceding claim, wherein the liquid metal is liquid tin.

13. An EUV light source including the liquid metal supply assembly according to any preceding claim.

14. A method of detecting flow of liquid metal, the method including: a) providing a liquid metal transportation conduit at an intended pre-set temperature different to the temperature of liquid metal held in a liquid metal reservoir in fluid communication with the liquid metal transportation conduit; b) measuring a temperature change of the liquid metal transportation conduit to determine whether liquid metal is flowing through the liquid metal transportation conduit.

15. The method of claim 14, wherein the method includes holding a liquid metal transportation conduit at a temperature higher than the temperature of liquid metal held in a liquid metal reservoir in fluid communication with the liquid metal transportation conduit.

16. The method of claim 14 or claim 15, wherein the method includes operating a heater in thermal communication to maintain the pre-set temperature of the liquid metal transportation conduit.

17. The method of claim 16, wherein the method includes calculating the flow rate of the liquid metal through the liquid metal transportation conduit based on the magnitude of the additional thermal energy required to maintain the temperature of the liquid metal transportation conduit at the pre-set temperature.

18. A lithographic apparatus including the liquid metal supply assembly or EUV light source according to any of claims 1 to 13.

19. Use of the liquid metal supply assembly, EUV light source, or method of any preceding claim in a lithographic assembly or method.
